# EUROPEAN PATENT APPLICATION

(11) **EP 4 462 691 A1**
(43) Date of publication of application: **13.11.2024**
(21) Application number: 23762855.7
(22) Date of filing: 28.02.2023
(51) Int. Cl.: H04B 5/00, H04W 76/30

(54) **COMMUNICATION METHOD AND COMMUNICATION APPARATUS**

(30) Priority: 02.03.2022 CN 202210197569
(71) Applicant: Huawei Technologies Co., Ltd., Shenzhen, Guangdong 518129 (CN)
(72) Inventor: LI, Chenwan, Shenzhen, Guangdong 518129 (CN); CHEN, Lei, Shenzhen, Guangdong 518129 (CN); WU, Yiling, Shenzhen, Guangdong 518129 (CN)
(74) Representative: Maiwald GmbH
(86) International application number: PCT/CN2023/078619
(87) International publication number: WO 2023/165456

(57) **Abstract**

Embodiments of this application provide a communication method and a communication apparatus. In this application, a network device receives first indication information from a core network device, where the first indication information indicates the network device to trigger, after receiving uplink data from a terminal device, another terminal device to access the network device. In this case, after the network device receives first uplink data from the terminal device, the network device may first release a connection to the terminal device based on the first indication information, and then trigger the another terminal device to access the network device. According to the method, complexity of data transmission and processing procedures of an inventory taking procedure transplanted to a cellular network can be reduced, so that an inventory taking rate of the terminal device (namely, a tag) and a communication capacity of a system are effectively improved.

## Description

This application claims priority to Chinese Patent Application No. 202210197569.6, filed with the China National Intellectual Property Administration on March 2, 2022 and entitled "COMMUNICATION METHOD AND COMMUNICATION APPARATUS", which is incorporated herein by reference in its entirety.

### TECHNICAL FIELD

Embodiments of this application relate to the communication field, and more specifically, to a communication method and a communication apparatus.

### BACKGROUND

Radio frequency identification (radio frequency identification, RFID) is a non-contact technology that implements bidirectional communication by using a radio frequency signal, spatial coupling, and a transmission characteristic, and is used to automatically identify a stationary or moving object and exchange information. An RFID system usually includes one RFID reader and a plurality of electronic tags. When the electronic tag enters a communication range of the reader, the RFID reader sends a read command to the electronic tag, to read an electronic product code (electronic product code, EPC) identifier in the electronic tag, and obtain, based on the EPC identifier, information about an article corresponding to the electronic tag, for example, a category and a placement position of the article.

An inventory taking rate is an important performance indicator in the RFID technology, and inventory taking efficiency is efficiency of identifying the tag by the reader. Currently, an inventory taking procedure of the electronic tag involves only two devices: the tag and the reader. If the current inventory taking procedure is transplanted to a cellular network, after a core network device is introduced, data transmission and processing procedures become more complex, which severely affects the important performance indicator, namely the inventory taking rate of the tag.

### SUMMARY

Embodiments of this application provide a communication method and a communication apparatus. The method can effectively improve an inventory taking rate of a terminal device (namely, a tag).

According to a first aspect, a communication method is provided. The method may be performed by a network device, or may be performed by a component (for example, a chip or a circuit) of the network device. This is not limited. For ease of description, an example in which the method is performed by the network device is used below for description.

The method may include: A network device receives first indication information from a core network device, where the first indication information indicates the network device to trigger, after receiving uplink data from a terminal device, another terminal device to access the network device; the network device receives first uplink data from the terminal device; and the network device triggers the another terminal device to access the network device.

In the foregoing technical solution, after receiving the uplink data from the terminal device, the network device may directly end communication with the terminal device and establish a communication connection to the another terminal device. According to the method, complexity of data transmission and processing procedures of an inventory taking procedure transplanted to a cellular network can be reduced, so that an inventory taking rate of the terminal device (namely, a tag) and a communication capacity of a system are effectively improved. The method is applicable to an inventory taking mode or a group read mode for a plurality of terminal devices. The inventory taking mode indicates that identity information of the terminal devices that access the network device is reported, and the group read mode indicates that content stored in a same storage area of the terminal devices that access the network device is reported.

In a possible design, that the first indication information indicates the network device to trigger, after receiving uplink data from a terminal device, another terminal device to access the network device includes: The first indication information indicates the network device to trigger, without waiting for an end indication from the core network device and after receiving the uplink data from the terminal device, the another terminal device to access the network device.

In the foregoing technical solution, after receiving the first uplink data, the network device may directly end the connection to the first terminal device based on the first indication information, and then trigger the another terminal device to access the network device, without waiting for a further indication from a core network to the first terminal device. According to the method, the complexity of the data transmission and processing procedures of the inventory taking procedure transplanted to the cellular network can be reduced, so that the inventory taking rate of the terminal device (namely, the tag) and the communication capacity of the system are effectively improved.

In a possible design, the method further includes: The network device sends first information to the core network device, where the first information includes the first uplink data.

In a possible design, the method further includes: The network device receives second uplink data from the another terminal device; and the network device sends second information to the core network device, where the second information includes the first uplink data and the second uplink data.

Based on the foregoing two possible design solutions, the network device may flexibly send the uplink data of the terminal device to the core network device.

In a possible design, in an inventory taking mode, the first uplink data includes identity information of the terminal device.

In a possible design, in a group read mode, the first uplink data includes data A and data B, where the data A indicates identity information of the terminal device, and the data B indicates information stored in a first storage area of the terminal device. The first storage area is a storage area that needs to be read and that is indicated by the group read mode.

In the foregoing technical solution, a core network reads a same storage area of terminal devices that access the network device in a group read manner without sequentially sending a read instruction to each terminal device. After a terminal device successfully accesses the network device, the network device may directly read, based on a group read instruction, a storage area corresponding to the terminal device. According to the method, information in a same storage area of a plurality of terminal devices can be quickly read. This greatly reduces reading time, and effectively improves an inventory taking rate of a tag (namely, the terminal device).

According to a second aspect, a communication method is provided. The method may be performed by a core network device, or may be performed by a component (for example, a chip or a circuit) of a core network. This is not limited. For ease of description, an example in which the method is performed by the core network device is used below for description.

The method may include: A core network device obtains first indication information, where the first indication information indicates a network device to trigger, after receiving uplink data from a terminal device, another terminal device to access the network device; and the core network device sends the first indication information to the network device.

In a possible design, that the first indication information indicates a network device to trigger, after receiving the uplink data from the terminal device, the another terminal device to access the network device includes:

The first indication information indicates the network device to triggers, without waiting for an end indication from the core network device and after receiving the uplink data from the terminal device, the another terminal device to access the network device.

In a possible design, the method further includes: The core network device receives first information from the network device, where the first information includes first uplink data, and the first uplink data is uplink data from the terminal device.

In a possible design, the method further includes: The core network device receives second information from the network device, where the second information includes first uplink data and second uplink data, the first uplink data is uplink data from the terminal device, and the second uplink data is uplink data from the another terminal device.

In a possible design, the first uplink data includes: identity information of the terminal device; or data A and data B, where the data A indicates identity information of the terminal device, and the data B indicates information in a storage area of the terminal device.

For effect corresponding to the second aspect, refer to the effect descriptions of the first aspect. Details are not described herein again.

According to a third aspect, a communication method is provided. The method may be performed by a network device, or may be performed by a component (for example, a chip or a circuit) of the network device. This is not limited. For ease of description, an example in which the method is performed by the network device is used below for description.

The method may include: A network device receives first indication information from a core network device, where the first indication information indicates the network device to trigger, after receiving an indication indicating that the core network device stops data transmission with a terminal device, another terminal device to access the network device; the network device receives second indication information from the core network device, where the second indication information indicates the network device to no longer perform data transmission with the terminal device; and the network device triggers the another terminal device to access the network device, to perform data transmission.

In the foregoing technical solution, the network device needs to wait for an end indication from a core network for a terminal device before releasing a connection to the terminal device. The method is applicable to an independent processing mode in which different processing needs to be performed on different terminal devices.

In a possible design, before the network device receives the second indication information from the core network device, the method further includes: The network device triggers the terminal device to access the network device; the network device receives first uplink data from the terminal device; and the network device sends first information to the core network device, where the first information includes the first uplink data.

In the foregoing technical solution, a data transmission procedure of each terminal needs to pass through transmission between the network device and a core network, and the network device needs to wait for an indication from the core network before releasing a connection to the terminal or a communication process. This is more applicable to a procedure in which terminal devices are processed in different manners. In a possible design, the method further includes: The network device receives a first service of the another terminal device from the core network device, where the first service corresponds to first duration; the network device sends the first service to the another terminal device; and the network device waits for second uplink data from the another terminal device within the first duration, where the second uplink data is uplink data fed back by the another terminal device for the first service.

For example, the first service includes the first duration, or the first service may be a first QoS service, and the first QoS service corresponds to the first duration.

In the foregoing technical solution, for a downlink service that requires a long air interface processing time, the core network indicates, to the network device, a service mode with a long feedback delay or duration required for processing the service, and the network device may perform corresponding processing based on the indication.

According to a fourth aspect, a communication method is provided. The method may be performed by a core network device, or may be performed by a component (for example, a chip or a circuit) of a core network. This is not limited. For ease of description, an example in which the method is performed by the core network device is used below for description.

The method may include: A core network device obtains first indication information, where the first indication information indicates a network device to trigger, after receiving an indication indicating that the core network device stops data transmission with a terminal device, another terminal device to access the network device; the core network device sends the first indication information to the network device; the core network device obtains second indication information, where the second indication information indicates the network device to no longer perform data transmission with the terminal device; and the core network device sends the second indication information to the network device.

In a possible design, before the core network device sends the second indication information to the network device, the method further includes: The core network device receives first information from the network device, where the first information includes first uplink data, and the first uplink data is uplink data from the terminal device.

In a possible design, the method further includes: The core network device sends a first service of the another terminal device to the network device, where the first service corresponds to first duration, the first duration indicates longest time for which the network device waits for second uplink data, and the second uplink data is uplink data fed back by the another terminal device for the first service.

For effect corresponding to the fourth aspect, refer to the effect descriptions of the third aspect. Details are not described herein again.

According to a fifth aspect, a communication apparatus is provided. The apparatus is configured to perform the method according to the first aspect or the third aspect. Specifically, the apparatus may include units and/or modules, for example, a processing unit and/or a communication unit, configured to perform the method according to the first aspect or the third aspect and any possible implementation of the third aspect or the third aspect.

In an implementation, the apparatus is a network device. When the apparatus is the network device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a network device. When the apparatus is the chip, the chip system, or the circuit used in the network device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to a sixth aspect, a communication apparatus is provided. The apparatus is configured to perform the method according to the second aspect or the fourth aspect. Specifically, the apparatus may include units and/or modules, for example, a processing unit and/or a communication unit, configured to perform the method according to the third aspect or the fourth aspect and any possible implementation of the second aspect or the fourth aspect.

In an implementation, the apparatus is a core network device. When the apparatus is the core network device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a core network device. When the apparatus is the chip, the chip system, or the circuit used in a terminal device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to a seventh aspect, a communication apparatus is provided. The apparatus includes at least one processor, where the at least one processor is coupled to at least one memory, the at least one memory is configured to store a computer program or instructions, and the at least one processor is configured to invoke and run the computer program or the instructions from the at least one memory, so that the communication apparatus performs the method according to the first aspect or the third aspect and any possible implementation of the first aspect or the third aspect.

In an implementation, the apparatus is a network device.

In another implementation, the apparatus is a chip, a chip system, or a circuit used in a network device.

According to an eighth aspect, a communication apparatus is provided. The apparatus includes at least one processor, where the at least one processor is coupled to at least one memory, the at least one memory is configured to store a computer program or instructions, and the at least one processor is configured to invoke and run the computer program or the instructions from the at least one memory, so that the communication apparatus performs the method according to the second aspect or the fourth aspect and any possible implementation of the second aspect or the fourth aspect.

In an implementation, the apparatus is a core network device.

In another implementation, the apparatus is a chip, a chip system, or a circuit used in a core network device.

According to a ninth aspect, this application provides a processor, configured to perform the method according to the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a tenth aspect, a computer-readable storage medium is provided. The computer-readable storage medium stores program code executed by a device, and the program code is configured to perform the method according to the first aspect, the second aspect, the third aspect, or the fourth aspect and any possible implementation of the first aspect, the second aspect, the third aspect, or the fourth aspect.

According to an eleventh aspect, a computer program product including instructions is provided. When the computer program product is run on a computer, the computer is enabled to perform the method according to the first aspect, the second aspect, the third aspect, or the fourth aspect and any possible implementation of the first aspect, the second aspect, the third aspect, or the fourth aspect.

According to a twelfth aspect, a chip is provided. The chip includes a processor and a communication interface. The processor reads, through the communication interface, instructions stored in a memory, to perform the method according to the first aspect, the second aspect, the third aspect, or the fourth aspect and any possible implementation of the first aspect, the second aspect, the third aspect, or the fourth aspect.

Optionally, in an implementation, the chip further includes a memory. The memory stores a computer program or instructions, the processor is configured to execute the computer program or the instructions stored in the memory, and when the computer program or the instructions are executed, the processor is configured to perform the method according to the first aspect, the second aspect, the third aspect, or the fourth aspect and any possible implementation of the first aspect, the second aspect, the third aspect, or the fourth aspect.

### BRIEF DESCRIPTION OF DRAWINGS

FIG. 1 is a diagram of a network architecture applicable to an embodiment of this application;
FIG. 2 is a schematic flowchart in which a tag accesses a reader;
FIG. 3 is a schematic flowchart of a communication method according to this application;
FIG. 4 is a schematic flowchart in which a terminal device accesses a network device in an inventory taking mode according to this application;
FIG. 5 is a schematic flowchart in which a terminal device accesses a network device in a group read mode according to this application;
FIG. 6 is a schematic flowchart of another communication method according to this application;
FIG. 7 is a schematic flowchart in which a terminal device accesses a network device in an independent processing mode according to this application;
FIG. 8 is a block diagram of a communication apparatus 1000 according to this application; and
FIG. 9 is a diagram of a structure of a communication apparatus 10 according to this application.

### DESCRIPTION OF EMBODIMENTS

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, a new radio (new radio, NR) system, or a future network. The 5G mobile communication system described in this application includes a non-standalone (non-standalone, NSA) 5G mobile communication system or a standalone (standalone, SA) 5G mobile communication system. The technical solutions provided in this application may be further applied to a future communication system, for example, a 6th generation mobile communication system. Alternatively, the communication system may be a public land mobile network (public land mobile network, PLMN), a device-to-device (device-to-device, D2D) communication system, a machine-to-machine (machine-to-machine, M2M) communication system, an internet of things (internet of Things, IoT) communication system, or another communication system.

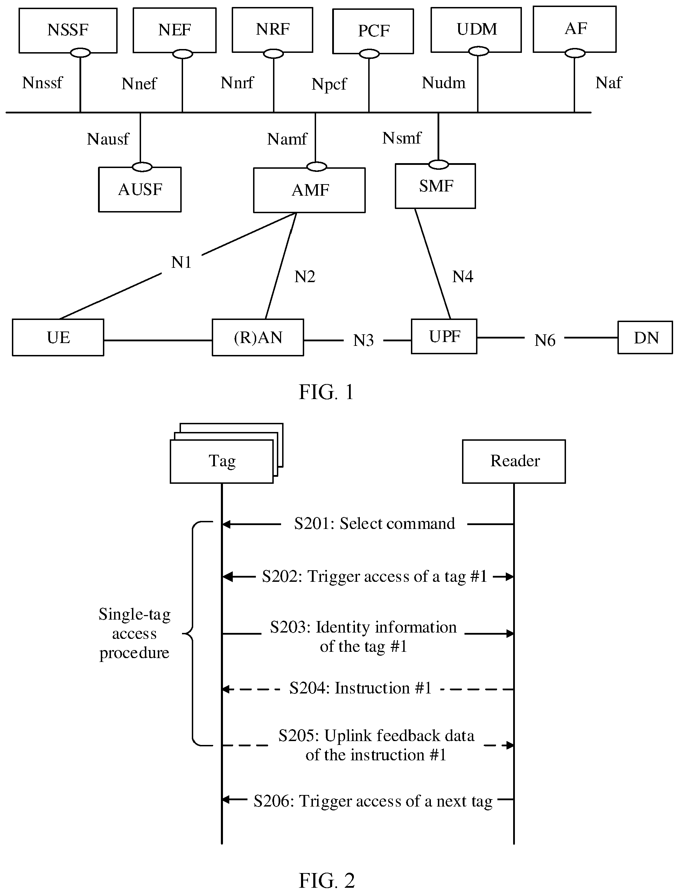

FIG. 1 is a diagram of a network architecture applicable to an embodiment of this application. As shown in FIG. 1, a 5G system (the 5th generation system, 5GS) is used as an example of the network architecture. The network architecture may include but is not limited to a network slice selection function (network slice selection function, NSSF), an authentication server function (authentication server function, AUSF), unified data management (unified data management, UDM), a network exposure function (network exposure function, NEF), a network repository function (NF repository function, NRF), a policy control function (policy control function, PCF), an application function (application function, AF), an access and mobility management function (access and mobility management function, AMF), a session management function (session management function, SMF), user equipment (user equipment, UE), a radio access network device, a user plane function (user plane function, UPF), and a data network (data network, DN).

The DN may be the internet. The NSSF, the AUSF, the UDM, the NEF, the NRF, the PCF, the AF, the AMF, the SMF, and the UPF are network elements in a core network. Because the 5G system is used as an example in FIG. 1, the core network may be referred to as a 5G core network (5G core network, 5GC or 5GCN).

The following briefly describes the network elements shown in FIG. 1.
1. User equipment (user equipment, UE): may include various handheld devices, vehicle-mounted devices, wearable devices, computing devices that have a wireless communication function, or other processing devices connected to a wireless modem, and various forms of terminals, mobile stations (mobile stations, MSs), terminals (terminals), soft clients, or the like, for example, a water meter, an electricity meter, or a sensor.

For example, the user equipment in embodiments of this application may be an access terminal, a user unit, a user station, a mobile station, a mobile console, a relay station, a remote station, a remote terminal, a mobile device, a user terminal (user terminal), a terminal device (terminal equipment), a wireless communication device, a user agent, or a user apparatus. The user equipment may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, user equipment in a 5G network, user equipment in a future evolved public land mobile network (public land mobile network, PLMN) or in future internet of vehicles, or the like. This is not limited in embodiments of this application.

As an example instead of a limitation, in embodiments of this application, the wearable device may also be referred to as a wearable intelligent device, and is a general term of wearable devices, such as glasses, gloves, a watch, clothes, and shoes, that are developed by applying a wearable technology to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-size devices that can implement complete or partial functions without depending on smartphones, such as smart watches or smart glasses, and devices that focus on only one type of application function and need to be used together with other devices such as smartphones, such as various smart bands or smart jewelry for monitoring physical signs.

In addition, in embodiments of this application, the user equipment may alternatively be user equipment in an internet of things system. The IoT is an important part of future information technology development. A main technical feature of the IoT is connecting a thing to a network by using a communication technology, to implement an intelligent network for interconnection between a person and a machine or between things. In embodiments of this application, an IoT technology may implement massive connections, deep coverage, and terminal power saving by using, for example, a narrowband (narrowband, NB) technology. In addition, in embodiments of this application, the user equipment may further include sensors such as a smart printer, a train detector, and a gas station. Main functions of the user equipment include collecting data (for some user equipments), receiving control information and downlink data of an access network device, sending an electromagnetic wave, and transmitting uplink data to the access network device.

2. (Radio) access network (radio access network, (R)AN) device: is configured to provide a network access function for authorized user equipments in a specific area, and can use transmission tunnels with different quality based on levels, service requirements, and the like of the user equipments.

The (R)AN can manage radio resources and provide an access service for user equipment, to forward a control signal and user equipment data between the user equipment and a core network. The (R)AN may also be understood as a base station in a conventional network.

For example, the access network device in embodiments of this application may be any communication device that has a wireless transceiver function and that is configured to communicate with the user equipment. The access network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (home evolved NodeB, HeNB or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like. Alternatively, the access network device may be a gNB or a transmission point (TRP or TP) in a 5G system like an NR system, may be an antenna panel or a group of antenna panels (including a plurality of antenna panels) of a base station in a 5G system, or may be a network node, for example, a baseband unit (BBU) or a distributed unit (distributed unit, DU), that constitutes a gNB or a transmission point.

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the access network device may be a device including one or more of a CU node, a DU node, or an AAU node. In addition, the CU may be classified into an access network device in an access network (radio access network, RAN), or the CU may be classified into an access network device in a core network (core network, CN). This is not limited in this application.

3. AMF: is mainly used for functions such as access control, mobility management, registration, and deregistration.

4. SMF: is mainly used for user plane network element selection, user plane network element redirection, internet protocol (internet protocol, IP) address assignment for the terminal device, session establishment, modification, and release, and QoS control.

5. UPF: is mainly used for receiving and forwarding user plane data. For example, the UPF may receive user plane data from the DN, and send the user plane data to the terminal device via the AN device. The UPF may alternatively receive user plane data from the terminal device via the AN device, and forward the user plane data to the DN.

6. NEF: is mainly used for securely exposing, to the outside, a service, a capability, and the like that are provided by a 3GPP network function.

7. PCF: is mainly used for guiding a unified policy framework for network behavior, and provide policy rule information and the like for a control plane network element (for example, the AMF or the SMF).

8. AF: is mainly used for providing a service for a 3GPP network, for example, interacting with the PCF to perform policy control.

9. Network slice selection function (network slice selection function, NSSF): is mainly used for network slice selection.

10. UDM: is mainly used for subscription data management of UE, including storage and management of a UE identifier, access authorization of the UE, and the like.

11. DN: is an operator network mainly used for providing a data service for UE, for example, the internet (Internet), a third-party service network, or an IP multimedia service (IP multimedia service, IMS) network.

12. AUSF: is mainly used for user authentication and the like.

13. NRF: is mainly used for storing a network functional entity, description information of a service provided by the network functional entity, and the like.

In the network architecture, an N1 interface is a reference point between the terminal and the AMF entity; an N2 interface is a reference point between the (R)AN and the AMF entity, and is used to send a non-access stratum (non-access stratum, NAS) message and the like; an N3 interface is a reference point between the (R)AN and the UPF entity, and is used to transmit user plane data and the like; an N4 interface is a reference point between the SMF entity and the UPF entity, and is used to transmit information such as tunnel identification information of an N3 connection, data buffer indication information, and a downlink data notification message; and an N6 interface is a reference point between the UPF entity and the DN, and is used to transmit user plane data and the like.

It should be understood that names of the network elements and communication interfaces between the network elements in FIG. 1 are briefly described by using an example specified in a current protocol. However, this does not mean that embodiments of this application can be applied only to a currently known communication system. Therefore, standard names that appear when the current protocol is used as an example for description are all functional descriptions. A specific name of a network element, an interface, signaling, or the like is not limited in this application, and only indicates a function of the network element, the interface, or the signaling, and may be correspondingly extended to another system.

It should be further understood that the network architecture applicable to embodiments of this application shown in FIG. 1 is merely an example for description, and the network architecture applicable to embodiments of this application is not limited thereto. Any network architecture that can implement functions of the network elements is applicable to embodiments of this application.

It should be further understood that the functions or the network elements, such as the AMF, the SMF, the UPF, the PCF, the UDM, the NSSF, and the AUSF shown in FIG. 1 may be understood as network elements configured to implement different functions, and for example, may be combined into a network slice based on a requirement. These network elements may be independent devices, may be integrated into a same device to implement different functions, may be network elements in a hardware device, may be software functions running on dedicated hardware, or may be virtualized functions instantiated on a platform (for example, a cloud platform). Specific forms of the network elements are not limited in this application.

It should be further understood that the names are defined merely for ease of distinguishing between different functions, and should not constitute any limitation on this application. This application does not exclude a possibility of using other names in a 6G network and another future network. For example, in the 6G network, some or all of the network elements may still use terms in 5G, or may use other names.

To facilitate understanding of embodiments of this application, concepts and related procedures in this application are described first.
1. Reader: may also be referred to as a radio frequency identification (radio frequency identification, RFID) reader, and is a handheld or fixed device that reads (or writes) tag information. The reader may also be understood as a device that communicates with a tag, and may be in a form of a terminal device, a base station, or a device having read and write functions.
2. Tag: can be referred to as an electronic tag or an RFID tag. Specifically, the tag may be a passive tag (passive tag) or an active tag (active tag). The passive tag obtains, through a command and a carrier sent by an RFID reader, working energy provided by the RFID reader. The active tag has an internal energy source, and the RFID reader does not need to provide the working energy for the active tag. The tag may also be considered as a terminal device.
3. Tag inventory taking: is a process in which a reader identifies a tag.

The following briefly describes a process in which a tag accesses a reader with reference to FIG. 2. The process in which the tag accesses the reader may also be understood as an inventory taking procedure of the tag.

S201: The reader sends a select (select) command, used to page at least one tag in a specified identification range to access the reader. For example, the reader obtains, through paging, a tag #1, a tag #2, and a tag #3 that need to access the reader.

It may be understood that the specified identification range herein refers to an identification range corresponding to a magnetic field range of the reader.

S202: The reader sequentially accesses, in a time division manner, the at least one tag obtained through paging. As an example, access of the tag #1 is used as an example for description herein.

S203: After successfully accessing the reader, the tag #1 sends uplink data to the reader. For example, the uplink data may be electronic product code (electronic product code, EPC) of the tag.

Optionally, the procedure may further include S204 and S205.

S204: The reader sends an instruction #1 to the tag #1, where the instruction #1 is used to read or write the tag #1.

S205: The tag #1 sends, for the instruction #1, uplink feedback data for the instruction #1 to the reader.

S206: After releasing a connection to the tag #1, the reader starts to process an access procedure of another tag.

It can be learned that there are only two devices: the tag and the reader in the access procedure. If the procedure is directly transplanted to a cellular network, after a core network device is introduced, data transmission and processing procedures become more complex. For example, in S203, after the tag #1 successfully accesses the reader, the reader sends, to the core network device, the uplink data sent by the tag #1, and then the core network device forwards the uplink data to a corresponding application server. If there is other downlink data that needs to be sent to the tag #1, for example, the downlink data is an instruction for reading content stored in a storage area of the tag #1, the downlink data needs to be sent from the application server to a core network, then sent to the reader by using the core network device, and then sent to the tag #1 by using the reader. In this way, compared with the procedure in FIG. 2, an interactive process in which the uplink data is transmitted from the reader to the core network and the downlink data is transmitted from the core network to the reader causes an extra transmission delay, which affects a capacity of an entire system. In addition, the reader does not know when to start access processing of the another tag, which severely affects an inventory taking rate of the tag, an important performance indicator.

In view of this, this application provides a communication method, to effectively resolve the foregoing technical problem. In all embodiments of this application, a terminal device may be considered as a specific form of a tag, and a network device may be considered as a specific form of a reader.

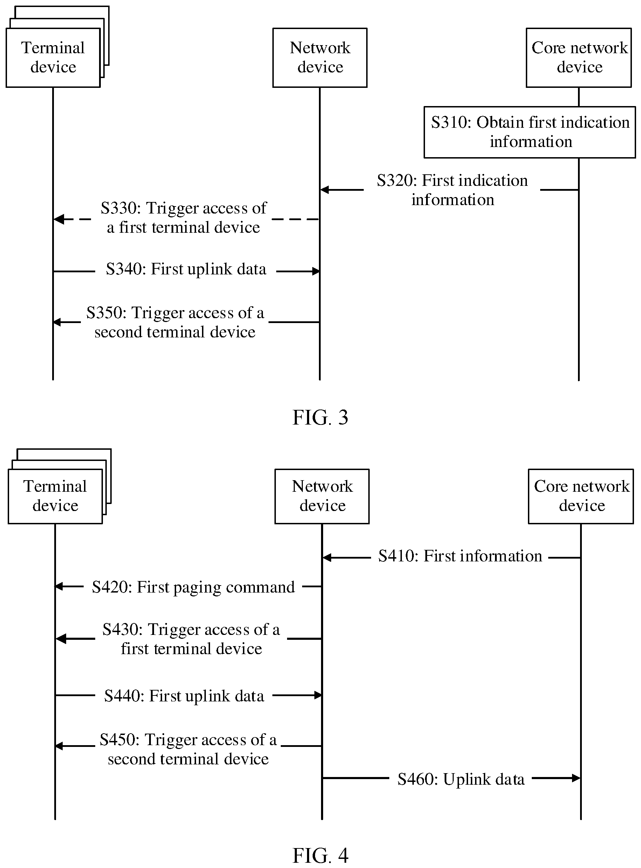

FIG. 3 is a schematic flowchart of a communication method according to this application. The method shown in FIG. 3 may include the following operations.

S310: A core network device obtains first indication information, where the first indication information indicates a network device to trigger, after receiving uplink data from a terminal device, another terminal device to access the network device.

For example, that the first indication information indicates a network device to trigger, after receiving uplink data from a terminal device, another terminal device to access the network device may also be understood as that the first indication information indicates the network device to trigger, without waiting for an end indication from the core network device and after receiving the uplink data from the terminal device, the another terminal device to access the network device. The end indication indicates the network device to no longer perform data transmission with the terminal device.

For example, that the network device no longer performs data transmission with the terminal device may also be understood as that the terminal device disconnects from the network device, the terminal device ends communication with the network device, or the network device releases a connection to the terminal device.

For example, the core network device in this embodiment may be an AMF network element. How the AMF network element obtains the first indication information is not specifically limited in this embodiment. In a specific implementation, an AF network element being a core network device may obtain the first indication information from an application server, and the AF network element forwards the first indication information to the AMF network element. Another core network element shown in FIG. 1 may alternatively be used in the forwarding process. Details are not described herein.

For ease of description, an example in which the terminal device is a first terminal device and the another terminal device is a second terminal device is used for description in subsequent steps.

S320: The core network device sends the first indication information to the network device. Correspondingly, the network device receives the first indication information from the core network device.

For example, in S330, the network device triggers the first terminal device to access the network device.

It can be learned from the description in S202 that the at least one terminal device obtained through paging of the network device needs to sequentially randomly access the network device in the time division manner. Therefore, that the network device triggers the first terminal device to access the network device in this step may be understood as that the network device notifies the first terminal device that the first terminal device may start to perform a random access procedure. For a specific random access procedure of the terminal device, refer to descriptions in the conventional technology. Details are not described herein.

For example, in this embodiment of this application, that the network device triggers a terminal device to access the network device may be understood as that the network device sends signaling to trigger the terminal device to access the network device.

S340: The first terminal device sends first uplink data to the network device. Correspondingly, the network device receives the first uplink data from the first terminal device.

S350: The network device triggers the second terminal device to access the network device.

Specifically, after receiving the first uplink data sent by the first terminal device, the network device may disconnect from the first terminal device based on an indication of the first indication information, and then trigger the second terminal device to access the network device. An access procedure of the second terminal device is the same as that of the first terminal device. After accessing the network device, the second terminal device also reports second uplink data to the network device.

For example, before S350, the network device may further perform transmission feedback on the first uplink data sent by the first terminal device. The network device triggers the second terminal device to access the network device only after determining that the first uplink data is successfully transmitted.

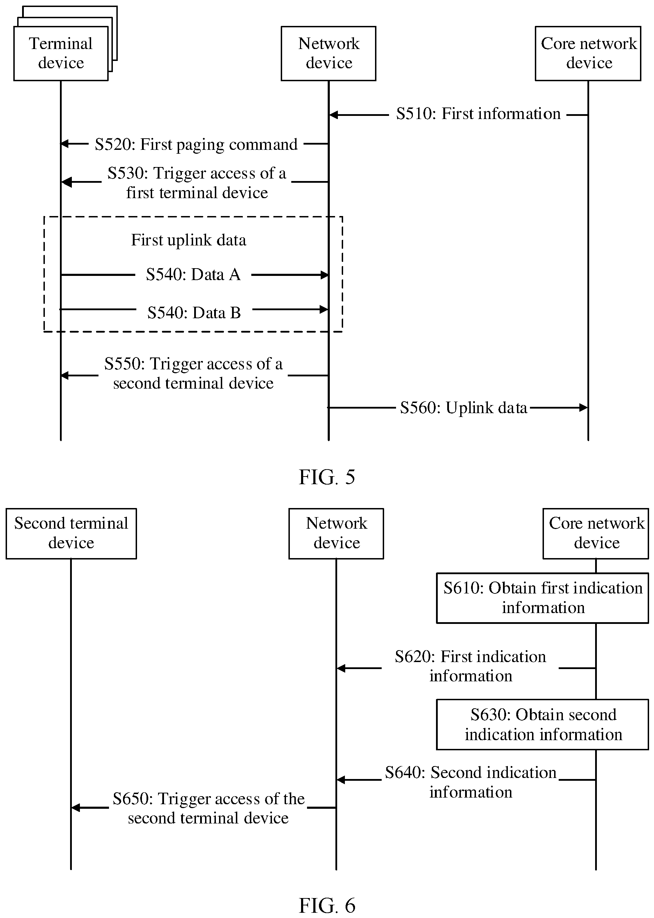

For example, the foregoing method may be applied to an inventory taking mode or a group read mode. The inventory taking mode may be understood as reporting identity information of terminal devices that access the network device, and the group read mode may be understood as reporting content stored in a same storage area of the terminal devices that access the network device. In a specific implementation, the first indication information may be delivered to the network device together with an inventory taking instruction or a group read instruction. In another specific implementation, the first indication information may be implicit in the inventory taking mode or the group read mode, that is, the core network device delivers the inventory taking mode or the group read mode to the network device. By default, in the two modes, the network device may trigger, after receiving uplink data from a terminal device, another terminal device to access the network device. Specific implementation procedures in the two modes are described in detail in FIG. 4 and FIG. 5. Details are not described herein.

It should be noted that, regardless of the uplink data reported by the first terminal device or the second terminal device, the network device finally needs to send the data to the core network device.

For example, each time the network device receives uplink data sent by a terminal device, the network device may send, to the core network device, uplink data corresponding to the terminal device. Alternatively, the network device may buffer, in the network device, the uplink data obtained from the terminal device, wait for corresponding uplink data sent by all terminal devices or at least two terminal devices, and package the uplink data of all the terminal devices or the uplink data of at least two terminal devices together and send packaged data to the core network device.

For example, uplink data of each terminal device may be included in one NAS container (container) or one NAS data packet. In a specific implementation, when the network device sends uplink data of a plurality of terminal devices, the network device may send an NAS container list to the network device, where the NAS container list includes NAS containers corresponding to the plurality of terminal devices.

For example, the uplink data of all the terminal devices or the uplink data of the at least two terminal devices is packaged together and sent to a core network, or the uplink data of each terminal device is separately sent to the core network. This may be indicated by the core network, or may be determined by the network device. This is not specifically limited in this application.

It can be learned that, in the foregoing method, after receiving uplink data from a terminal device, the network device may directly end communication with the terminal device and establish a communication connection to another terminal device without sending the uplink data to the core network and waiting for a further indication from the core network. According to the method, complexity of data transmission and processing procedures of an inventory taking procedure transplanted to a cellular network can be reduced, so that an inventory taking rate of the terminal device (namely, a tag) and a communication capacity of a system are effectively improved.

With reference to FIG. 4 and FIG. 5, the following provides a specific implementation procedure in which the method in FIG. 3 is applied to the inventory taking mode and the group read mode.

FIG. 4 is a schematic flowchart in which the method shown in FIG. 3 is applied in an inventory taking mode. The method shown in FIG. 4 may include the following operations.

S410: A core network device sends first information to a network device. Correspondingly, the network device receives the first information from the core network device.

For example, the first information includes an inventory taking instruction and first indication information, where the inventory taking instruction instructs the network device to report identity information of a terminal device that accesses the network device, and the first indication information indicates the network device to trigger, after receiving uplink data from a terminal device, another terminal device to access the network device.

For example, the first information includes the inventory taking instruction, and the inventory taking instruction instructs the network device to report the identity information of the terminal device that accesses the network device. In the inventory taking mode, by default, the network device may trigger, after receiving uplink data from a terminal device, another terminal device to access the network device.

S420: The network device broadcasts a first paging command.

It should be understood that the first paging command is determined based on the first information. The first paging command is used to page at least one terminal device to access the network device and report identity information of the terminal device that accesses the network device.

For example, the first paging command may include one piece of NAS data, to determine a paged terminal device.

For example, the NAS data may be obtained from the core network device.

Optionally, the first paging command may be an RRC message or a message of another type. This is not limited in this application.

For ease of description, in this embodiment, an example in which paged terminal devices include a first terminal device and a second terminal device is used for description, and the first terminal device accesses the network device before the second terminal device does.

S430: The network device triggers the first terminal device to access the network device.

S440: The first terminal device sends first uplink data to the network device. Correspondingly, the network device receives the first uplink data from the first terminal device.

The first uplink data includes identity information of the first terminal device. For example, the identity information of the first terminal device is EPC of the first terminal device.

S450: The network device triggers the second terminal device to access the network device.

For specific descriptions of S430 to S450, refer to S330 to S350. Details are not described herein again.

S460: The network device sends the uplink data from the terminal device to the core network device.

For how to send the uplink data from the terminal device to the core network device, refer to the description in the embodiment corresponding to FIG. 3. Details are not described herein again.

In the inventory taking mode, after receiving uplink data from a terminal device, the network device may directly end a connection to the terminal device based on the first indication information, and then trigger another terminal device to access the network device, without waiting for the uplink data from the terminal device to be transmitted to a core network and waiting for a further indication from the core network. According to the method, inventory taking can be quickly performed on a plurality of terminals, and an inventory taking rate of a tag is effectively improved.

The following describes an embodiment corresponding to FIG. 5. The method in this embodiment may be applied to a group read service of a terminal device. According to the method, information in a same storage area of a plurality of terminal devices can be quickly read. The method shown in FIG. 5 may include the following operations.

S510: A core network device sends first information to a network device. Correspondingly, the network device receives the first information from the core network device.

For example, the first information includes a group read instruction and first indication information, where the first indication information indicates the network device to trigger, after receiving uplink data from a terminal device, another terminal device to access the network device. The group read instruction instructs to read content stored in a first storage area of the terminal device that accesses the network device. In other words, in a group read mode, the network device reads content stored in the same storage area of the terminal devices that access the network device. For example, the first storage area may be an article category of the terminal device, or may be a place for storing the terminal device.

For example, the first information includes the group read instruction, where the group read instruction instructs to read the content stored in the first storage area of the terminal device that accesses the network device. In the group read mode, by default, the network device may trigger, after receiving uplink data from a terminal device, another terminal device to access the network device.

S520: The network device broadcasts a first paging command.

It should be understood that the first paging command is determined based on the first information. The first paging command is used to page at least one terminal device to access the network device and report content of a first storage area of the terminal device that accesses the network device.

For example, the first paging command may include one piece of NAS data, to determine a paged terminal device.

For example, the NAS data may be obtained from the core network device.

Optionally, the first paging command may be an RRC message or a message of another type. This is not limited in this application.

For ease of description, in this embodiment, an example in which paged terminal devices include a first terminal device and a second terminal device is used for description, and the first terminal device accesses the network device before the second terminal device does.

S530: The network device triggers the first terminal device to access the network device.

S540: The first terminal device sends first uplink data to the network device. Correspondingly, the network device receives the first uplink data from the first terminal device.

The first uplink data includes data A and data B, where the data A is identity information of the first terminal device, and the data B is content stored in a first storage area of the first terminal device.

For example, the terminal device may carry the data A and the data B in a same physical layer transport block and simultaneously send the data A and the data B to the network device, or the terminal device may carry the data A and the data B in different physical layer transport blocks and send the data A and the data B to the network device separately.

S550: The network device triggers the second terminal device to access the network device.

For specific descriptions of S530 to S550, refer to S330 to S350. Details are not described herein again.

S560: The network device sends the uplink data from the terminal device to the core network device.

For how to send the uplink data from the terminal device to the core network device, refer to the description in the embodiment corresponding to FIG. 3. Details are not described herein again.

In a group read scenario, the core network device delivers a read instruction to each terminal device at a time without sequentially sending the read instruction to each terminal device, so that efficient transmission can be implemented. After successfully accessing the network device, a terminal device directly reports, according to a previously received first paging command, content that needs to be read by the core network device, and the network device may directly end a connection to the terminal device based on the first indication information, and trigger access to another terminal device, without waiting for the uplink data of the terminal device to be transmitted to the core network and waiting for a further indication from the core network. According to the method, information in a same storage area of a plurality of terminal devices can be quickly read. This greatly reduces reading time, and effectively improves an inventory taking rate of a tag (namely, the terminal device).

FIG. 6 is a schematic flowchart of another communication method according to this application. A biggest difference between this embodiment and the embodiment corresponding to FIG. 3 lies in that, in this embodiment, a network device needs to wait for an indication from a core network device to trigger access of a next terminal device. The method shown in FIG. 6 may include the following operations.

S610: The core network device obtains first indication information. The first indication information indicates the network device to trigger, after receiving an indication indicating that the core network device stops data transmission with a terminal device, another terminal device to access the network device.

For example, that the network device no longer performs data transmission with a terminal device may also be understood as that the terminal device disconnects from the network device, the terminal device ends communication with the network device, or the network device releases a connection to the terminal device.

For example, the core network device in this embodiment may be an AMF network element. How the AMF network element obtains the first indication information and second indication information is not specifically limited in this embodiment. In a specific implementation, obtaining the first indication information is used as an example. An AF network element being a core network device may obtain the first indication information from an application server, and the AF network element forwards the first indication information to the AMF network element. Another core network element shown in FIG. 1 may alternatively be used in the forwarding process. Details are not described herein.

For ease of description, an example in which the terminal device is a first terminal device and the another terminal device is a second terminal device is used for description in subsequent steps.

S620: The core network device sends the first indication information to the network device. Correspondingly, the network device receives the first indication information from a core network.

S630: The core network device obtains the second indication information.

The second indication information indicates the network device to no longer perform data transmission with the first terminal device. It should be understood that the first terminal device is a terminal device that currently performs data transmission with the network device.

S640: The core network device sends the second indication information to the network device. Correspondingly, the network device receives the second indication information from the core network device.

S650: The network device triggers the second terminal device to access the network device, to perform data transmission.

Specifically, after receiving the second indication information, the network device disconnects from the first terminal device, and then may trigger the second terminal device to access the network device.

It can be learned that, in the embodiment corresponding to FIG. 6, the core network needs to indicate the network device to disconnect from any terminal device. Therefore, the method may be applied to an independent processing mode in which different terminal devices are processed in different manners.

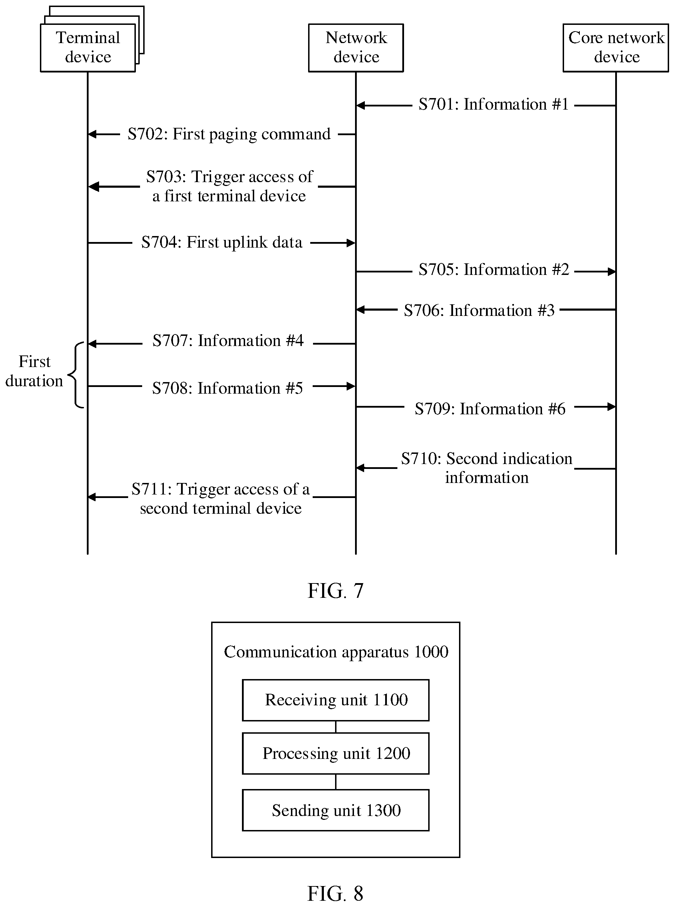

For ease of understanding, an example in which the independent processing mode is independently performing read/write on different terminal devices is used herein for description. The following provides a specific implementation procedure of the method in FIG. 6 in the scenario with reference to FIG. 7. The method shown in FIG. 7 may include the following operations.

S701: A core network device sends information #1 to a network device. Correspondingly, the network device receives the information #1 from the core network device.

For example, the information #1 includes an independent read/write instruction and first indication information, where the independent read/write instruction instructs to separately perform reading or writing on each terminal device that accesses the network device, and the first indication information indicates the network device to trigger, after receiving an indication indicating that the core network device stops data transmission with a terminal device, another terminal device to access the network device.

For example, the information #1 includes the independent read/write instruction, where the independent read/write instruction instructs to separately perform reading or writing on each terminal device that accesses the network device. In addition, in an independent read/write mode, by default, the network device considers that the network device needs to wait for an indication indicating that the core network device stops data transmission with a terminal device, to trigger another terminal device to access the network device.

For example, in the independent read mode, the core network device may read, based on an actual requirement, different storage areas of different terminal devices after the different terminal devices access the network device. For example, a core network may read a category of an article of a terminal device #1 after the terminal device #1 accesses the network device, and read a place for storing a terminal device #2 after the terminal device #2 accesses the network device.

For example, the information #1 may further include first duration or a first quality of service (quality of service, QoS) requirement, where the first QoS requirement corresponds to the first duration. The first duration or the first QoS requirement indicates that after the terminal device accesses the network device, for downlink data received from the core network, the terminal device needs to process the downlink data within the first duration. Correspondingly, after the network device sends the downlink data received from the core network to the terminal device, the network device needs to wait, within the first duration, for uplink data fed back by the terminal device.

For example, if the network device does not receive the uplink data fed back by the terminal device, the network device notifies the core network, or stops the data transmission with the terminal device.

S702: The network device sends a first paging command to the terminal device.

It should be understood that the first paging command is determined based on the information #1. The first paging command is used to page at least one terminal device to access the network device.

For example, the first paging command may include one piece of NAS data, where the NAS data is used to determine a paged terminal device.

For example, the NAS data may be obtained from the core network device.

For example, the first paging command may be an RRC message or a message of another type. This is not limited in this application.

For ease of description, in this embodiment, an example in which paged terminal devices include a first terminal device and a second terminal device is used for description, and the first terminal device accesses the network device before the second terminal device does.

S703: The network device triggers the first terminal device to access the network device.

S704: The first terminal device sends first uplink data to the network device. Correspondingly, the network device receives the first uplink data from the first terminal device.

The first uplink data includes identity information of the first terminal device. For example, the identity information of the first terminal device is EPC of the first terminal device.

S705: The network device sends information #2 to the core network device, where the information #2 includes the first uplink data. Correspondingly, the core network device receives the information #2 from the network device.

S706: The core network device sends information #3 to the network device. Correspondingly, the network device receives the information #3 from the core network device.

The information #3 includes a first service, and the first service is used to read content stored in a first storage area of the first terminal device, or the first service includes data #1, and the first service is used to indicate to write the data #1 into a first storage area of the first terminal device.

For example, the first service corresponds to first duration. In this case, the method further includes: After receiving the first service from the core network device, the network device sends the first service to the first terminal device, and waits, within the first duration, for the uplink data sent by the terminal device. Therefore, the first service may also be understood as a service with a long delay. In a possible specific implementation, after sending the first service to the terminal device, the network device may start a timer T to wait for the uplink data that is for the first service and that is sent by the terminal device, where T is the first duration. For example, a value of T may be 20 ms.

For example, the value of the first duration may be processing duration that corresponds to the first service and that is specified in a protocol, or the value of the first duration may be included in the information #3.

For example, if the network device does not receive the uplink data for the first service within the first duration, the network device may notify the core network of the case, and the core network determines a subsequent procedure, or stop data transmission with the first terminal device. This is not limited in this application.

S707: The network device sends information #4 to the first terminal device. Correspondingly, the first terminal device receives the information #4 from the network device, where the information #4 includes the first service.

For example, an example in which the network device receives the uplink data fed back by the first terminal device is used below for continuing to describe a subsequent procedure.

S708: The first terminal device sends information #5 to the network device. Correspondingly, the network device receives the information #5 from the first terminal device.

The information #5 includes feedback information for the first service. For example, if the first service is used to indicate to write the data #1 into the first storage area of the first terminal device, the information #5 includes feedback information of the first terminal device for writing the data #1 into the first storage area.

S709: The network device sends information #6 to the core network device. Correspondingly, the core network device receives the information #6 from the network device, where the information #6 includes the feedback information for the first service.

For example, after receiving the information #6, if there is no subsequent operation performed on the first terminal device, the core network may indicate the network device to disconnect from the first terminal device, that is, S710 may be performed.

S710: The core network device sends the second indication information to the network device, where the second indication information indicates the network device to no longer perform data transmission with the first terminal device. Correspondingly, the network device receives the second indication information from the core network device.

S711: The network device triggers the second terminal device to access the network device.

Specifically, after receiving the second indication information, the network device may disconnect from the first terminal device, and then may trigger the second terminal device to access the network device. An access procedure and an independent read/write procedure of the second terminal device are basically the same as those of the first terminal device. Details are not described herein.

In the foregoing technical solution, a data transmission procedure of each terminal device needs to pass through transmission between the network device and the core network, and the network device needs to wait for the indication from the core network before releasing the connection to the terminal device. The method is more applicable to an independent processing mode in which the terminal devices need to be processed in different manners.

The foregoing describes in detail the communication method provided in this application. The following describes a communication apparatus provided in this application.

FIG. 8 is a block diagram of a communication apparatus 1000 according to this application.

In a possible design, the communication apparatus 1000 includes a receiving unit 1100 and a processing unit 1200. The communication apparatus 1000 may implement the steps or the procedures performed by the network device in the foregoing method embodiments. For example, the communication apparatus 1000 may be a network device, or a chip or a circuit configured in the network device. The receiving unit 1100 is configured to perform a receiving-related operation of the network device in the foregoing method embodiments, and the processing unit 1200 is configured to perform a processing-related operation of the network device in the foregoing method embodiments.

In a possible implementation, the receiving unit 1100 receives first indication information from a core network device, where the first indication information indicates the network device to trigger, after receiving uplink data from a terminal device, another terminal device to access the network device; the receiving unit 1100 is further configured to receive first uplink data from the terminal device; and the processing unit 1200 is configured to trigger the another terminal device to access the network device. For the first uplink data, refer to the description in the embodiment corresponding to FIG. 3. Details are not described herein again.

Optionally, the communication apparatus 1000 further includes a sending unit 1300. The sending unit 1300 and the receiving unit 1100 may alternatively be integrated into a transceiver unit that has both a receiving function and a sending function. This is not limited herein.

Optionally, the sending unit 1300 is configured to send first information to the core network device, where the first information includes the first uplink data.

Optionally, the receiving unit 1100 is further configured to receive second uplink data from the another terminal device, and the sending unit 1300 is further configured to send second information to the core network device, where the second information includes the first uplink data and the second uplink data.

In another possible implementation, the receiving unit 1100 is configured to receive the first indication information from the core network device, where the first indication information indicates the network device to trigger, after receiving an indication indicating that the core network device stops data transmission with the terminal device, the another terminal device to access the network device; the receiving unit 1100 is further configured to receive second indication information from the core network device, where the second indication information indicates the network device to no longer perform data transmission with the terminal device; and the processing unit 1200 is configured to trigger the another terminal device to access the network device, to perform data transmission.

Optionally, the processing unit 1200 is further configured to trigger the terminal device to access the network device; the receiving unit 1100 is further configured to receive the first uplink data from the terminal device; and the sending unit 1300 is configured to send the first information to the core network device, where the first information includes the first uplink data.

Optionally, the receiving unit 1100 is further configured to receive a first service of the another terminal device, where the first service corresponds to first duration; the sending unit 1300 is further configured to send the first service to the another terminal device; and the processing unit 1200 is further configured to wait for the second uplink data from the another terminal device within the first duration, where the second uplink data is uplink data fed back by the another terminal device for the first service.

Optionally, in an implementation in which the communication apparatus 1000 is the network device in the method embodiment, the sending unit 1300 may be a transmitter, and the receiving unit 1100 may be a receiver. The receiver and the transmitter may alternatively be integrated into a transceiver. The processing unit 1200 may be a processing apparatus.

A function of the processing apparatus may be implemented by hardware, or may be implemented by hardware executing corresponding software. For example, the processing apparatus may include a memory and a processor. The memory is configured to store a computer program, and the processor reads and executes the computer program stored in the memory, so that the communication apparatus 1000 performs the operations and/or the processing performed by the network device in the method embodiments. Optionally, the processing apparatus may include only a processor, and the memory configured to store the computer program is located outside the processing apparatus. The processor is connected to the memory through a circuit/wire, to read and execute the computer program stored in the memory. For another example, the processing apparatus may be a chip or an integrated circuit.

Optionally, in an implementation in which the communication apparatus 1000 is a chip or an integrated circuit installed in the network device, the sending unit 1300 and the receiving unit 1100 may be a communication interface or an interface circuit. For example, the sending unit 1300 is an output interface or an output circuit, and the receiving unit 1100 is an input interface or an input circuit. The processing unit 1200 may be a processor or a microprocessor integrated on the chip or the integrated circuit. This is not limited herein.

In another possible design, the communication apparatus 1000 includes a processing unit 1200 and a sending unit 1300. The communication apparatus 1000 may implement the steps or the procedures performed by the core network device in the foregoing method embodiments. For example, the communication apparatus 1000 may be a core network device, or a chip or a circuit configured in the core network device. The sending unit 1300 is configured to perform a receiving-related operation of the core network device in the foregoing method embodiments, and the processing unit 1200 is configured to perform a processing-related operation of the core network device in the foregoing method embodiments.

In a possible implementation, the processing unit 1200 is configured to obtain first indication information, where the first indication information indicates a network device to trigger, after receiving uplink data from a terminal device, another terminal device to access the network device; and the sending unit 1300 is configured to send the first indication information to the network device. For first uplink data, refer to the description in the embodiment corresponding to FIG. 3. Details are not described herein again.

Optionally, the communication apparatus 1000 further includes a receiving unit 1100. The sending unit 1300 and the receiving unit 1100 may alternatively be integrated into a transceiver unit that has both a receiving function and a sending function. This is not limited herein.

Optionally, the receiving unit 1100 is configured to receive first information from the network device, where the first information includes first uplink data, and the first uplink data is uplink data from the terminal device.

Optionally, the receiving unit 1100 is further configured to receive second information from the network device, where the second information includes the first uplink data and second uplink data, the first uplink data is uplink data from the terminal device, and the second uplink data is uplink data from the another terminal device.

Optionally, the communication apparatus 1000 may further include the processing unit 1200. The sending unit 1300 and the receiving unit 1100 may alternatively be integrated into a transceiver unit that has both a receiving function and a sending function. This is not limited herein.

In another possible implementation, the processing unit 1200 is configured to obtain the first indication information, where the first indication information indicates the network device to trigger, after receiving an indication indicating that the core network device stops data transmission with the terminal device, the another terminal device to access the network device; the sending unit 1300 is configured to send the first indication information to the network device; the processing unit 1200 is configured to obtain second indication information, where the second indication information indicates the network device to no longer perform data transmission with the terminal device; and the sending unit 1300 is configured to send the second indication information to the network device.

Optionally, the receiving unit 1100 is further configured to receive first information from the network device, where the first information includes the first uplink data, and the first uplink data is uplink data from the terminal device.

Optionally, the sending unit 1300 is further configured to send a first service of the another terminal device to the network device, where the first service corresponds to first duration, the first duration indicates longest time for which the network device waits for the second uplink data, and the second uplink data is uplink data fed back by the another terminal device for the first service.

Optionally, in an implementation in which the communication apparatus 1000 is the core network device in the method embodiment, the sending unit 1300 may be a transmitter, and the receiving unit 1100 may be a receiver. The receiver and the transmitter may alternatively be integrated into a transceiver. The processing unit 1200 may be a processing apparatus.

A function of the processing apparatus may be implemented by hardware, or may be implemented by hardware executing corresponding software. For example, the processing apparatus may include a memory and a processor. The memory is configured to store a computer program, and the processor reads and executes the computer program stored in the memory, so that the communication apparatus 1000 performs the operations and/or the processing performed by the core network device in the method embodiments. Optionally, the processing apparatus may include only a processor, and the memory configured to store the computer program is located outside the processing apparatus. The processor is connected to the memory through a circuit/wire, to read and execute the computer program stored in the memory. For another example, the processing apparatus may be a chip or an integrated circuit.

Optionally, in an implementation in which the communication apparatus 1000 is a chip or an integrated circuit installed in the core network device, the sending unit 1300 and the receiving unit 1100 may be a communication interface or an interface circuit. For example, the sending unit 1300 is an output interface or an output circuit, and the receiving unit 1100 is an input interface or an input circuit. The processing unit 1200 may be a processor or a microprocessor integrated on the chip or the integrated circuit. This is not limited herein.

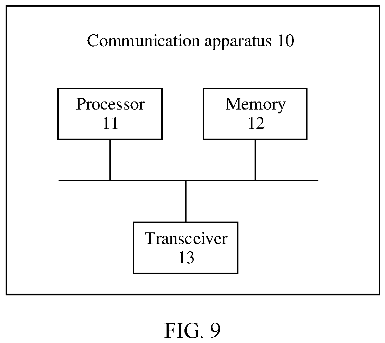

FIG. 9 is a diagram of a structure of a communication apparatus 10 according to this application. The apparatus 10 includes a processor 11. The processor 11 is coupled to a memory 12, the memory 12 is configured to store a computer program or instructions and/or data, and the processor 11 is configured to: execute the computer program or the instructions stored in the memory 12, or read the data stored in the memory 12, to perform the method in the foregoing method embodiments.

Optionally, there are one or more processors 11.

Optionally, there are one or more memories 12.

Optionally, the memory 12 and the processor 11 are integrated together, or are disposed separately.

Optionally, as shown in FIG. 5, the apparatus 10 further includes a transceiver 13, and the transceiver 13 is configured to: receive and/or send a signal. For example, the processor 11 is configured to control the transceiver 13 to receive and/or send the signal.

In a solution, the apparatus 10 is configured to implement the operations performed by the network device in the foregoing method embodiments.

For example, the processor 11 is configured to execute the computer program or the instructions stored in the memory 12, to implement the related operations performed by the network device in the foregoing method embodiments, for example, implement the method performed by the network device in the embodiments shown in FIG. 3 to FIG. 7.

In another solution, the apparatus 10 is configured to implement the operations performed by the core network device in the foregoing method embodiments.

For example, the processor 11 is configured to execute the computer program or the instructions stored in the memory 12, to implement the related operations performed by the core network device in the foregoing method embodiments, for example, implement the method performed by the core network device in the embodiments shown in FIG. 3 to FIG. 7.

In addition, this application further provides a computer-readable storage medium. The computer-readable storage medium stores computer instructions, and when the computer instructions are run on a computer, the operations and/or the procedures performed by the core network device or the network device in the method embodiments of this application are performed.

This application further provides a computer program product. The computer program product includes computer program code or instructions, and when the computer program code or the instructions are run on a computer, the operations and/or the procedures performed by the core network device or the network device in the method embodiments of this application are performed.

In addition, this application further provides a chip, and the chip includes a processor. A memory configured to store a computer program is disposed independent of the chip. The processor is configured to execute the computer program stored in the memory, to perform the operations and/or the processing performed by the core network device or the network device in any method embodiment.

Further, the chip may include a communication interface. The communication interface may be an input/output interface, an interface circuit, or the like. Further, the chip may include a memory.

In addition, this application further provides a communication system. The communication system includes the core network device and the network device in embodiments of this application.

It should be understood that the processor in this embodiment of this application may be an integrated circuit chip, and has a signal processing capability. In an implementation process, the steps in the foregoing method embodiments can be implemented by using a hardware integrated logical circuit in the processor, or by using the instructions in a form of software. The processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA), another programmable logic device, a discrete gate or a transistor logic device, a discrete hardware component, or the like. The general-purpose processor may be a microprocessor, or the processor may be any conventional processor, or the like. The steps of the methods disclosed in embodiments of this application may be directly performed and completed by a hardware encoding processor, or performed and completed by a combination of hardware and a software module in the encoding processor. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

The memory in this embodiment of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through an example but not a limitative description, RAMs in many forms are available, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DRRAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should be further noted that, the memory described in this specification is intended to include, but is not limited to, these memories and any memory of another proper type.

A person of ordinary skill in the art may be aware that units and algorithm steps described with reference to embodiments disclosed in this specification can be implemented by electronic hardware, or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application. It may be clearly understood by a person skilled in the art that, for convenient and brief description, for a detailed working process of the foregoing system, apparatus, and unit, refer to a corresponding process in the foregoing method embodiments. Details are not described herein again. In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms. The units described as separate components may or may not be physically separate, and components displayed as units may or may not be physical units, may be located in one position, or may be distributed on a plurality of network units. Some or all of the units may be selected based on actual requirements to achieve the objectives of the solutions of embodiments. In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, the particular features, structures, or characteristics may be combined in one or more embodiments in any proper manner.

It should be further understood that ordinal numerals such as "first" and "second" in embodiments of this application are used to distinguish between a plurality of objects, and are not intended to limit sizes, content, an order, a time sequence, priorities, or importance degrees of the plurality of objects. For example, first information and second information do not indicate a difference in an information amount, content, a priority, an importance degree, or the like.

It should be further understood that, in this application, both "when" and "if" mean that a network element performs corresponding processing in an objective situation, but do not constitute a limitation on time, do not require that the network element has a determining action during implementation, and do not mean another limitation either.

It should be further understood that, in this application, "at least one" means one or more, and "a plurality of means two or more. "At least one item (piece)" or a similar expression thereof means one item (piece) or a plurality of items (pieces), that is, any combination of these items, including any combination of singular items (pieces) or plural items (pieces). For example, at least one item (piece) of a, b, or c may indicate a, b, c, a and b, a and c, b and c, or a, b, and c.

It should be further understood that, unless otherwise specified, an expression used in this application similar to an expression that "an item includes one or more of the following: A, B, and C" usually means that the item may be any one of the following: A; B; C; A and B; A and C; B and C; A, B, and C; A and A; A, A, and A; A, A, and B; A, A, and C; A, B, and B; A, C, and C; B and B; B, B, and B; B, B, and C; C and C; C, C, and C; and another combination of A, B, and C. In the foregoing descriptions, three elements A, B, and C are used as an example to describe an optional case of the item. When an expression is "the item includes at least one of the following: A, B, ..., and X", in other words, more elements are included in the expression, a case to which the item is applicable may also be obtained according to the foregoing rule.

It should be further understood that a term "and/or" in this specification describes only an association relationship between associated objects and indicates that three relationships may exist. For example, A and/or B may indicate the following three cases: Only A exists, both A and B exist, and only B exists, where A and B may be singular or plural. A character "/" usually indicates an "or" relationship between the associated objects. For example, A/B indicates A or B.

It should be further understood that, in embodiments of this application, "B corresponding to A" indicates that B is associated with A, and B may be determined based on A. However, it should be further understood that determining B based on A does not mean that B is determined based only on A. B may alternatively be determined based on A and/or other information.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a network device, first indication information from a core network device, wherein the first indication information indicates the network device to trigger, after receiving uplink data from a terminal device, another terminal device to access the network device;
receiving, by the network device, first uplink data from the terminal device; and
triggering, by the network device, the another terminal device to access the network device.

2. The method according to claim 1, wherein that the first indication information indicates the network device to trigger, after receiving uplink data from a terminal device, another terminal device to access the network device comprises:
the first indication information indicates the network device to trigger, without waiting for an end indication from the core network device and after receiving the uplink data from the terminal device, the another terminal device to access the network device.

3. The method according to claim 1 or 2, wherein the method further comprises:
sending, by the network device, first information to the core network device, wherein the first information comprises the first uplink data.

4. The method according to claim 1 or 2, wherein the method further comprises:
receiving, by the network device, second uplink data from the another terminal device; and
sending, by the network device, second information to the core network device, wherein the second information comprises the first uplink data and the second uplink data.

5. The method according to any one of claims 1 to 4, wherein the first uplink data comprises:
identity information of the terminal device; or
data A and data B, wherein the data A indicates identity information of the terminal device, and the data B indicates information stored in a storage area of the terminal device.

6. A communication method, comprising:
obtaining, by a core network device, first indication information, wherein the first indication information indicates a network device to trigger, after receiving uplink data from a terminal device, another terminal device to access the network device; and
sending, by the core network device, the first indication information to the network device.

7. The method according to claim 6, wherein that the first indication information indicates a network device to trigger, after receiving uplink data from a terminal device, another terminal device to access the network device comprises:
the first indication information indicates the network device to trigger, without waiting for an end indication from the core network device and after receiving the uplink data from the terminal device, the another terminal device to access the network device.

8. The method according to claim 6 or 7, wherein the method further comprises:
receiving, by the core network device, first information from the network device, wherein the first information comprises first uplink data, and the first uplink data is uplink data from the terminal device.

9. The method according to claim 6 or 7, wherein the method further comprises:
receiving, by the core network device, second information from the network device, wherein the second information comprises first uplink data and second uplink data, the first uplink data is uplink data from the terminal device, and the second uplink data is uplink data from the another terminal device.

10. The method according to claim 8 or 9, wherein the first uplink data comprises:
identity information of the terminal device; or
data A and data B, wherein the data A indicates identity information of the terminal device, and the data B indicates information in a storage area of the terminal device.

11. A communication method, comprising:
receiving, by a network device, first indication information from a core network device, wherein the first indication information indicates the network device to trigger, after receiving an indication indicating that the core network device stops data transmission with a terminal device, another terminal device to access the network device;
receiving, by the network device, second indication information from the core network device, wherein the second indication information indicates the network device to no longer perform data transmission with the terminal device; and
triggering, by the network device, the another terminal device to access the network device, to perform data transmission.

12. The method according to claim 11, wherein before the receiving, by the network device, second indication information from the core network device, the method further comprises:
triggering, by the network device, the terminal device to access the network device;
receiving, by the network device, first uplink data from the terminal device; and
sending, by the network device, first information to the core network device, wherein the first information comprises the first uplink data.

13. The method according to claim 11 or 12, wherein the method further comprises:
receiving, by the network device, a first service of the another terminal device from the core network device, wherein the first service corresponds to first duration;
sending, by the network device, the first service to the another terminal device; and
waiting, by the network device, for second uplink data from the another terminal device within the first duration, wherein the second uplink data is uplink data fed back by the another terminal device for the first service.

14. A communication method, comprising:
obtaining, by a core network device, first indication information, wherein the first indication information indicates a network device to trigger, after receiving an indication indicating that the core network device stops data transmission with a terminal device, another terminal device to access the network device;
sending, by the core network device, the first indication information to the network device;
obtaining, by the core network device, second indication information, wherein the second indication information indicates the network device to no longer perform data transmission with the terminal device; and
sending, by the core network device, the second indication information to the network device.

15. The method according to claim 14, wherein before the sending, by the core network device, the second indication information to the network device, the method further comprises:
receiving, by the core network device, first information from the network device, wherein the first information comprises first uplink data, and the first uplink data is uplink data from the terminal device.

16. The method according to claim 14 or 15, wherein the method further comprises:
sending, by the core network device, a first service of the another terminal device to the network device after the core network device determines that the another terminal device accesses the network device, wherein the first service corresponds to first duration, the first duration indicates longest time for which the network device waits for second uplink data, and the second uplink data is uplink data fed back by the another terminal device for the first service.

17. A communication apparatus, comprising modules configured to perform the method according to any one of claims 1 to 4, 5 to 10, 11 to 13, or 14 to 16.

18. A communication apparatus, wherein the communication apparatus comprises at least one processor and at least one memory, the at least one memory is configured to store a computer program or instructions, and the at least one processor is configured to execute the computer program or the instructions in the memory, so that the method according to any one of claims 1 to 4, the method according to any one of claims 5 to 10, the method according to any one of claims 11 to 13, or the method according to any one of claims 14 to 16 is performed.

19. A computer-readable storage medium, wherein the computer-readable storage medium stores computer instructions, and when the computer instructions are run on a computer, the method according to any one of claims 1 to 4, the method according to any one of claims 5 to 10, the method according to any one of claims 11 to 13, or the method according to any one of claims 14 to 16 is performed.

20. A computer program product, wherein the computer program product comprises computer program code, and when the computer program code is run on a computer, the method according to any one of claims 1 to 4, the method according to any one of claims 5 to 10, the method according to any one of claims 11 to 13, or the method according to any one of claims 14 to 16 is performed.

21. A communication system, comprising a network device and a core network device, wherein the network device is configured to perform the method according to any one of claims 1 to 5, and the core network device is configured to perform the method according to any one of claims 6 to 10; or the network device is configured to perform the method according to any one of claims 11 to 13, and the core network device is configured to perform the method according to any one of claims 14 to 16.
